# EUROPEAN PATENT APPLICATION

(11) **EP 4 485 268 A1**
(43) Date of publication of application: **01.01.2025**
(21) Application number: 23213443.7
(22) Date of filing: 30.11.2023
(51) Int. Cl.: G06F 30/30, G03F 7/20

(54) **LAYOUT DECOMPOSITION FOR OPTICAL PROXIMITY CORRECTION IN PHOTOLITHOGRAPHY MASKS**

(30) Priority: 29.06.2023 US 202318216475
(71) Applicant: INTEL Corporation, Santa Clara, CA 95054 (US)
(72) Inventor: WAGNER, Stephan, Portland, OR 97217 (US); GUMBEL, Matthew K., Portland, OR 97219 (US)
(74) Representative: HGF

(57) **Abstract**

Methods for layout decomposition of photolithographic masks are provided. The decomposition creates domains that can be sent to independent computing resources for optimization. A first partition is created for the photolithographic mask design. Buffer regions are created around photolithographic features and a search distance is selected. The buffer regions and search distance are used in a pathfinding algorithm to determine new boundaries for new domains. The methods can be stored, for example, on at least one machine-readable storage medium as non-transitory instructions.

## Description

### FIELD

Descriptions are generally related to semiconductor processing, and more particular descriptions are related to photomasks used for optical lithography and partitioning photomask designs for processing.

### BACKGROUND

Semiconductor chips are central to intelligent devices and systems, such as personal computers, laptops, tablets, phones, servers, and other consumer and industrial products and systems. Manufacturing semiconductor chips presents a number of challenges and these challenges are amplified as devices become smaller and performance demands increase. Challenges include, for example, unwanted material interactions, precision and scaling requirements, power delivery requirements, limited failure tolerance, and material and manufacturing costs.

Photolithography is used in the semiconductor manufacturing industry to pattern a layer of photosensitive material, for example, a photoresist. To pattern the photoresist, a mask (also called a photomask, lithographic mask, or a lithographic photomask) is used as a template to create a light pattern which exposes only a portion of the photoresist. Depending on the type of photoresist selected, a subsequent process such as exposing the patterned surface to a solvent, removes either the exposed or the unexposed sections of the photoresist from the surface of the chip being manufactured. The patterned photoresist can then be used as a template to, for example, deposit materials onto or etch the surface of the chip in locations specified by the template.

Photomasks for creating semiconductor chips having, for example, billions of features, are complex. Since features of a semiconductor chip are very small, the lithography process needs to be very accurate. Photomask design may have to take into account factors such as, the wavelength of light, the light source, optics, location of the features being created, and characteristics of the photolithography mask, equipment, and materials which can create unwanted diffraction or process effects. One method for enhancing lithographic accuracy is optical proximity correction (OPC), a technique performed on a mask design layout before manufacturing the physical mask from the design layout. Because OPC is computeintensive, photolithographic mask designs are broken into spatial sections and sent to different computing resources to process the sections in parallel.

### BRIEF DESCRIPTION OF THE DRAWINGS

The figures are provided to aid in understanding the invention. The figures can include diagrams and illustrations of exemplary structures, assemblies, data, methods, and systems. For ease of explanation and understanding, these structures, assemblies, data, methods, and systems, the figures are not an exhaustively detailed description. The figures therefore should not be understood to depict the entire metes and bounds of structures, assemblies, data, methods, and systems possible without departing from the scope of the invention. Features that are the same in a particular Figure have been illustrated using the same shading. Features with no shading can be, but not necessarily are, different features.
**Figure 1** illustrates an exemplary section of a photomask layout design and two different boundary edges for computational domains.
**Figure 2** diagrams a method for partitioning a photomask design layout into regions.
**Figure 3** shows a photomask layout design having two different buffer regions that are used to find boundaries for computational domains.
**Figure 4** illustrates an exemplary method for non-manhattan lithographic features.
**Figures 5A and 5B** show features through which a domain boundary has passed.
**Figure 6** provides a photomask design layout divided into different computational domains based on two different boundaries.
**Figure 7** provides an exemplary computing system that can be used in embodiments of the invention.

Descriptions of certain details and implementations follow, including non-limiting descriptions of the figures, which depict some examples and implementations.

### DETAILED DESCRIPTION

References to one or more examples herein are to be understood as describing a particular feature, structure, or characteristic included in at least one implementation of the invention. The phrase "one example" or "an example" are not necessarily all referring to the same example or embodiment. Any aspect described herein can potentially be combined with any other aspect or similar aspect described herein, regardless of whether the aspects are described with respect to the same figure or element.

The words "connected" and/or "coupled" can indicate that two or more elements are in direct physical or electrical contact with each other. The term "coupled," however, can also mean that two or more elements are not in direct contact with each other and are instead separated by one or more elements but they may still co-operate or interact with each other, for example, physically, magnetically, or electrically.

The words "first," "second," and the like, do not indicate order, quantity, or importance, but rather are used to distinguish one element from another. The words "a" and "an" herein do not indicate a limitation of quantity, but rather denote the presence of at least one of the referenced items. The terms "follow" or "after" can indicate immediately following or following after some other event or events. Other sequences of operations can also be performed according to alternative embodiments. Furthermore, additional operations may be added or removed depending on the particular application.

Disjunctive language such as the phrase "at least one of X, Y, or Z," is used in general to indicate that an element or feature, may be either X, Y, or Z, or any combination thereof (e.g., X, Y, and/or Z). Thus, this disjunctive language should be understood not to imply that certain embodiments require at least one of X, at least one of Y, or at least one of Z to each be present.

Terms such as chip, die, IC (integrated circuit) chip, IC die, or semiconductor chip are used interchangeably and refer to a semiconductor device comprising integrated circuits.

Flow diagrams as illustrated herein provide examples of sequences of various process actions. The flow diagrams can indicate operations to be executed by a software or firmware routine, as well as physical operations. Although shown in a particular sequence or order, unless otherwise specified, the order of the actions can be modified. Thus, the illustrated diagrams should be understood only as examples, and the process can be performed in a different order, and some actions can be performed in parallel. Additionally, one or more actions can be omitted and not all implementations will perform all actions.

Methods can be implemented as software modules, hardware modules, special-purpose hardware (for example, application specific hardware, application specific integrated circuits (ASICs), digital signal processors (DSPs), etc.), embedded controllers, or hardwired circuitry).

To the extent various computer operations or functions are described herein, they can be described or defined as software code, instructions, configuration, and/or data. The software content can be provided via an article of manufacture with the software content stored thereon, or via a method of operating a communication interface to send data via the communication interface. A machine readable storage medium can cause a machine to perform the functions or operations described, and includes any mechanism that stores information in a tangible form accessible by a machine (e.g., computing device), such as recordable/non-recordable media (e.g., read only memory (ROM), random access memory (RAM), magnetic disk storage media, optical storage media, flash memory devices). A communication interface includes any mechanism that interfaces to, for example, a hardwired, wireless, or optical medium to communicate to another device, such as, for example, a memory bus interface, a processor bus interface, an Internet connection, a disk controller.

Some OPC techniques partition photomasks for a full chip layout into fixed-size spatial computational domains. These fixed-size computational domains are independently optimized in parallel in a batch compute environment. The optimized chip domains are then re-assembled into an output file for the full chip. However, if two neighboring chip domains converge to different solutions at their boundary, a domain mis-match (DMM) is created and the resulting full-chip output will not be manufacturable. Repair solutions for DMMs can be complex and cause significant delay.

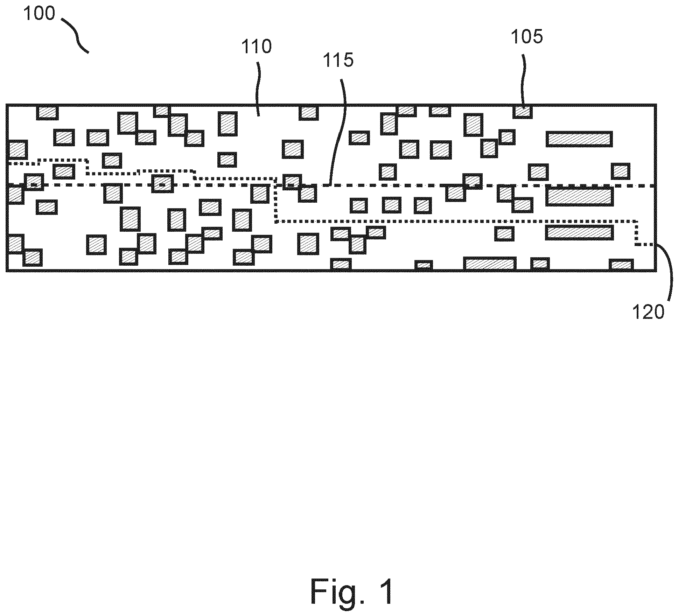

Choosing a less simple boundary for a computational domain can reduce the amount of DMMs that are created during an OPC process. In Figure 1, an exemplary section of a photomask design layout 100 showing different boundary choices for computational domains. The exemplary section of the photomask design layout 100 includes photolithographic features 105 and background region 110. Dashed line 115 illustrates the path of a boundary selection for a computational domain based on, for example, a grid pattern. Dashed line 120 illustrates how a computational domain with a larger number of vertices, 10 or more for example, can allow avoidance of having features and regions on boundary edges. Dashed line 120 shows a partial domain boundary for a domain that is a polyhedron with many sides. Vertices are the corners where sides meet in, for example, polyhedrons and polygons. Features or regions on boundary edges can create situations where DMM is an impediment to a functional full-chip layout when OPC is used on computational domains and domains are rejoined in a full chip layout. Examples described herein provide computational domains that are polyhedrons having larger numbers of vertices, for example, domains can have greater than 10 vertices.

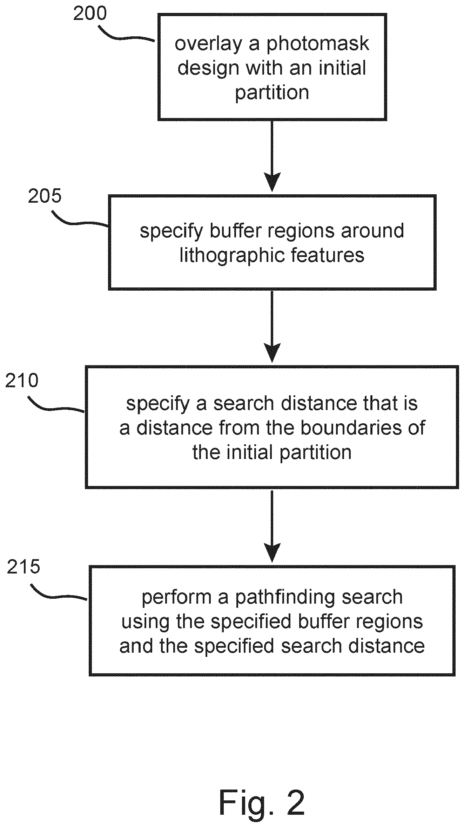

Figure 2 diagrams a method for partitioning a photomask design layout into regions that can be used in an OPC process in which the regions are sent to computing resources for independent processing. A photomask design layout is overlayed with an initial partition 200. For example, the initial partition can be a grid that creates rectangular or square sections. The initial partition provides non-optimized domain boundaries. Buffer regions around lithographic features are specified 205. Buffer regions are regions that are keep away regions for partition borders. Buffer regions can deprioritize partitioning the photomask design layout in selected areas, so that a pathfinding algorithm avoids these areas if reasonable to do so. Some compromise can be necessary with respect to where domain boundaries fall and all buffer regions are not necessarily all avoided. In some examples, the buffer region size is specified by a user. Different buffer sizes can be specified for different regions and/or different areas of the photomask. In other examples, the buffer region is a previously established amount depending on, for example, feature identity and location. In additional examples, the buffer size is sometimes user specified and sometimes it is a previously established amount for different features or areas of the photomask. A search distance is selected where the search distance is the maximum distance away from a border of the initial partition 210. The maximum distance away from a border provides limits for the area in which the path searching algorithm will search for a path. In some examples, the maximum search distance from a border is specified by a user. In other examples the maximum search distance is a previously established amount. In additional examples, the maximum search distance is specified by a user for some regions of a photomask and a previously established amount for others.

Lithographic photomask designs are created for the numerous photolithographic processes that are used to manufacture a chip. These photolithographic processes can be referred to as layers, for example, as metal layer 1, metal layer 2, metal layer 3, etc. or via layer 1, via layer 2, via layer 3, etc. Optionally, photomask designs for other layers that are to be included in the pathfinding search process are also specified. In some examples, the pathfinding algorithm only considers the photomask design for one layer. In other examples, the design of additional layers is also considered by the pathfinding algorithm. Features on additional layers that should be avoided by the pathfinding algorithm can be specified by a user, can be a previously established feature region, or a combination of both.

Specified algorithmic configuration parameters (e.g., buffer regions and search distance(s)) are used in a pathfinding search algorithm 215. The pathfinding algorithm can be, for example, the A* algorithm. In an exemplary pathfinding search using the A* algorithm, the spatial distribution of chip layout geometry and whitespace is translated into a weighted graph suitable for input into A*. The spatial distribution of chip layout geometry and whitespace is made suitable for input into A* by decomposing polygons into aligned rectangles which become nodes in the graph, and relationships between those polygons which become weighted edges in the graph.

Optical proximity correction techniques can grow a target geometry by some amount. A method to avoid having target geometry features cross domain boundaries after OPC includes placing an additional buffer region (keep away region) around the selected target geometry feature prior to translating the selected target geometry feature into graph form for the A* algorithm path search. For example, an additional buffer regions can be placed at line-ends for line-ends that may grow more than other features in the OPC calculations.

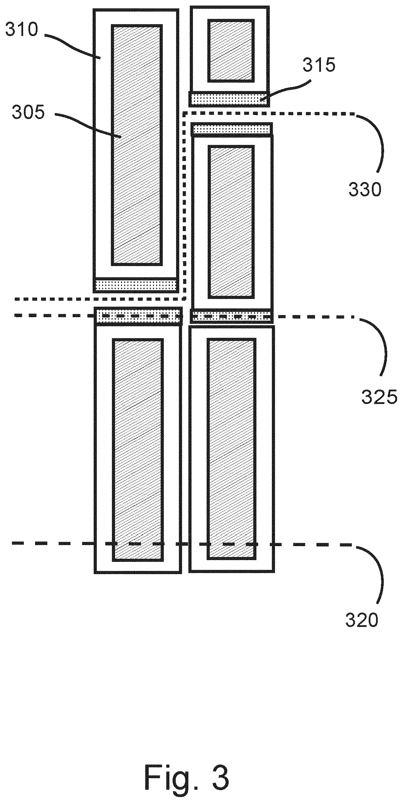

Figure 3 illustrates a collection of lithographic photomask features 305 from a section of a design for a photomask. For a pathfinding algorithm, buffer regions 315 have been placed around photomask features 305. These buffer regions (second keep away zones) 315 are in addition to first keep away zones (first buffer regions) 310 in Figure 3. Dashed line 320 illustrates a path search region boundary and dashed line 325 illustrates a path that was determined using only the first buffer regions 310 in the path finding algorithm. Dashed line 330 illustrates the path that was determined using the additional buffer regions 315. The additional buffer regions 315 prevent the border for the OPC computational domain from being placed in a region that may be disadvantageous when the domains are stitched back together for the full photomask layout. The additional buffer regions 315 can deprioritize partitioning the photomask design layout in selected areas, so that a pathfinding algorithm avoids these areas if reasonable to do so. Additionally buffer regions can be regions that are absolutely to be avoided and no domain boundaries may pass through the regions. Second buffer regions can be, for example, a combination of regions to avoid and regions to absolutely avoid. The second buffer regions 315 are optionally part of the method described herein and with respect to Figure 2.

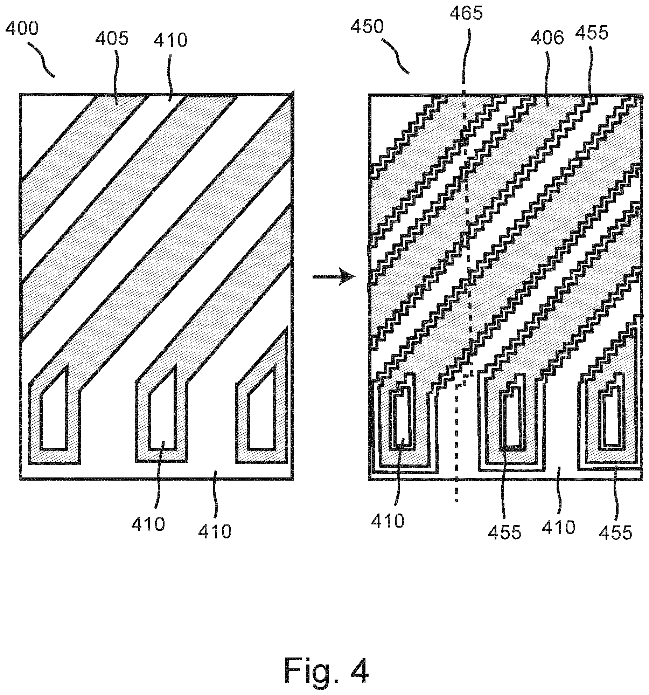

Figure 4 illustrates an exemplary technique for lithographic photomask design features that are non-manhattan features. This technique is useful, for example, in the methods described with respect to Figures 1-3. Since non-manhattan features are not amenable to decomposition into aligned rectangles, a manhattanized approximation of the lithographic features can be created. Figure 4 shows a section of a lithographic photomask 400 having non-manhattan features 405 and background section 410. In photomask design section 450, a manhattanized approximation has been created for features 406 and a keep away buffer region 455 has been added. A pathfinding algorithm using features 406 and keep away buffer region 455 can create domain boundary 465 (shown as a dashed line).

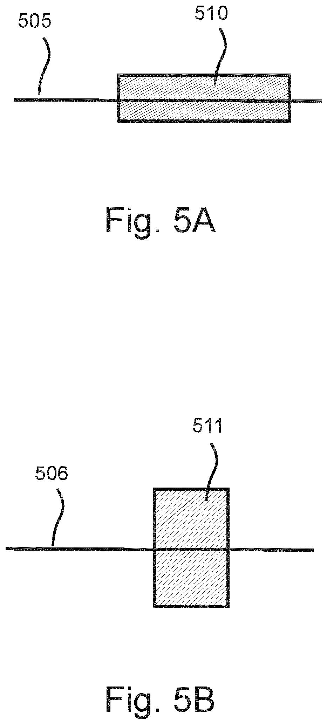

In some examples, domain boundaries created by the pathfinding program of Figures 1-4 and accompanying description, can pass through some lithographic features, such as, for example, sub-resolution assist features (SRAFs) in the orthogonal direction, but not in the parallel direction. Figure 5A shows a domain boundary 505 that has passed through a feature 510 in the parallel direction. In the example of Figure 5A, the feature 510 is a rectangle with a long pass-through direction and a shorter pass-through direction. In some examples, having the domain boundary 505 cut through the longer pass-through direction is to be avoided, so the result in Figure 5A is avoided. Figure 5B shows a different lithographic feature 511 where the domain boundary 506 has been placed through a shorter length of the feature 511. If a domain boundary 506 passes through a feature, it can optionally be preferred to have it pass through in the shorter cut-through direction, such as in the example shown in Figure 5B.

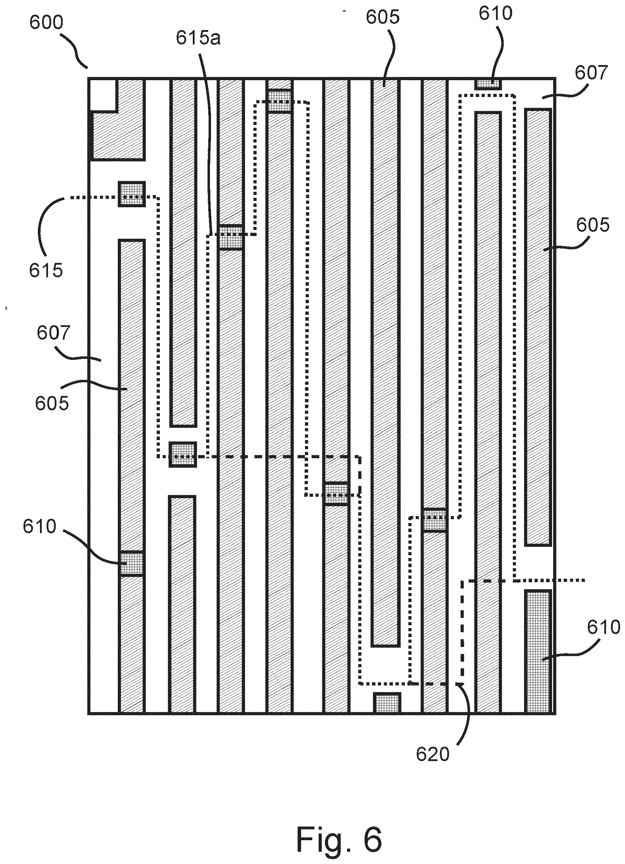

Figure 6 illustrates an additional exemplary method for determining a computational domain boundary for a lithographic mask design layout. The method of Figure 6 can optionally be used with examples of Figures 1-4 and 5A-5B and the accompanying description herein. In Figure 6, a section of a lithographic mask design layout 600 having lithographic features 605 and background section 607 is shown. Additionally in Figure 6, preferred boundary location regions 610 are shown. The preferred boundary location regions 610 can be, for example, regions where there are fully nested polygons in preference to partially nested polygons, or other undesired cut-through locations. A partially nested polygon is one where there is an empty space (i.e., a space without a lithographic feature as close as the other neighboring features). Preferred boundary regions 610 can also be known though prior experiences with lithographic masks, features, processes, and/or OPC calculations. Artificial intelligence based on, for example, prior previous runs having at least some similar characteristics, can also be used to inform selection of locations for preferred boundary location regions 610. Preferred boundary location regions 610 can also be specified by a user. Some or all of the foregoing boundary location selection tools can be used in one or more examples, for example, one or more different buffer regions can be specified as well as one more different types of preferred boundary location regions. The preferred calculated boundary 615 is shown by a dashed line (closer-spaced dashes) and the original boundary 620 is shown by a dashed line having larger spaced dashes. Where the preferred and original boundary regions 615 and 620 overlap, the line is also closer-spaced dashes, so that the final boundary region is shown by line 615. Number 615a points to region of the boundary 615 in which the preferred boundary 615 passes through a fully nested lithographic feature 605 in preference for the original boundary 620 which passed through a partially nested lithographic feature 605. Additionally, preferred boundary location regions 610 can receive levels where a first level is more preferred than a second or third (etc.) level for receiving a boundary region placement. These levels can be specified by any of the foregoing methods described for determining preferred boundary location regions 610.

Full chip layouts can be composed hierarchically and features can be grouped into cells. Features are sometimes repeated many times in a chip layout. Cells can be very large and can be larger than domains. For lithographic mask layouts containing cells, the above method for determining a computational boundary can be further limited so that the pathfinding search does not cross cell boundaries and is performed within a cell. Additionally, the pathfinding search weights can also be adjusted to prefer solutions in which the computational boundary comes closer to the original cell boundary. In some examples, the computational boundary is as close as 0 nm from the cell boundary, e.g., the cell boundary and the computational boundary are the same in some areas. Having a computational boundary closer to the original cell boundary can increase the amount of hierarchical re-use of OPC outputs.

Additionally, the number of very small or very narrow computational domains that are created by the pathfinding search can be reduced by adjusting computational boundaries so that small or narrow domains are merged into neighboring domains. Small domains are, for example, domains where the domain area is less than 50 % of the average domain area. Narrow computational domains are, for example, domains where one dimension is less than 50 % of a second orthogonal dimension.

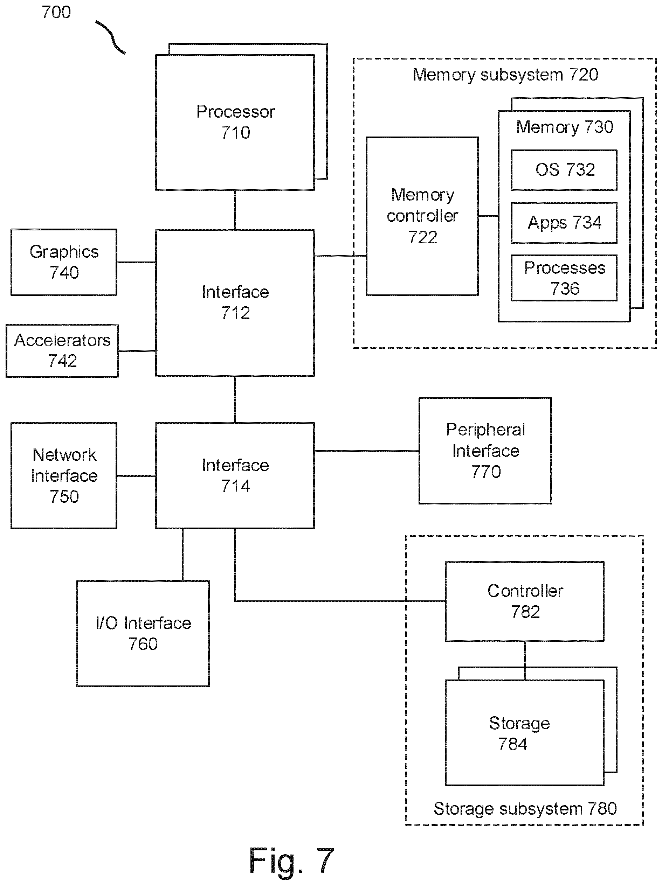

Figure 7 depicts an example computing system which can be used for the computational methods in Figures 1-4, 5A-5B, and 6 and as described herein. The computing system can be a system used for running equipment in a semiconductor fabrication plant. For example, instructions for performing one or more aspects of the methods described herein can be stored and/or run on the computing system. The methods describe herein can be stored, for example, on at least one machine-readable storage medium as non-transitory instructions. The computing system employed can include more, different, or fewer features than the one described with respect to Figure 7.

Computing system 700 includes processor 710, which provides processing, operation management, and execution of instructions for system 700. Processor 710 can include any type of microprocessor, CPU (central processing unit), GPU (graphics processing unit), processing core, or other processing hardware to provide processing for system 700, or a combination of processors or processing cores. Processor 710 controls the overall operation of system 700, and can be or include, one or more programmable general-purpose or special-purpose microprocessors, DSPs, programmable controllers, ASICs, programmable logic devices (PLDs), or the like, or a combination of such devices.

In one example, system 700 includes interface 712 coupled to processor 710, which can represent a higher speed interface or a high throughput interface for system components needing higher bandwidth connections, such as memory subsystem 720 or graphics interface components 740, and/or accelerators 742. Interface 712 represents an interface circuit, which can be a standalone component or integrated onto a processor die. Where present, graphics interface 740 interfaces to graphics components for providing a visual display to a user of system 700. In one example, the display can include a touchscreen display.

Accelerators 742 can be a fixed function or programmable offload engine that can be accessed or used by a processor 710. For example, an accelerator among accelerators 742 can provide data compression (DC) capability, cryptography services such as public key encryption (PKE), cipher, hash/authentication capabilities, decryption, or other capabilities or services. In some cases, accelerators 742 can be integrated into a CPU socket (e.g., a connector to a motherboard (or circuit board, printed circuit board, mainboard, system board, or logic board) that includes a CPU and provides an electrical interface with the CPU). For example, accelerators 742 can include a single or multi-core processor, graphics processing unit, logical execution unit single or multi-level cache, functional units usable to independently execute programs or threads, application specific integrated circuits (ASICs), neural network processors (NNPs), programmable control logic, and programmable processing elements such as field programmable gate arrays (FPGAs) or programmable logic devices (PLDs). Accelerators 742 can provide multiple neural networks, CPUs, processor cores, general purpose graphics processing units, or graphics processing units can be made available for use by artificial intelligence (Al) or machine learning (ML) models.

Memory subsystem 720 represents the main memory of system 700 and provides storage for code to be executed by processor 710, or data values to be used in executing a routine. Memory subsystem 720 can include one or more memory devices 730 such as read-only memory (ROM), flash memory, one or more varieties of random access memory (RAM) such as static RAM (SRAM), dynamic RAM (DRAM), synchronous DRAM (SDRAM) and/or or other memory devices, or a combination of such devices. Memory 730 stores and hosts, among other things, operating system (OS) 732 that provides a software platform for execution of instructions in system 700, and stores and hosts applications 734 and processes 736. In one example, memory subsystem 720 includes memory controller 722, which is a memory controller to generate and issue commands to memory 730. The memory controller 722 could be a physical part of processor 710 or a physical part of interface 712. For example, memory controller 722 can be an integrated memory controller, integrated onto a circuit within processor 710.

System 700 can also optionally include one or more buses or bus systems between devices, such memory buses, graphics buses, and/or interface buses. Buses or other signal lines can communicatively or electrically couple components together, or both communicatively and electrically couple the components. Buses can include physical communication lines, point-to-point connections, bridges, adapters, controllers, or other circuitry or a combination. Buses can include, for example, one or more of a system bus, a PCI (peripheral component interconnect) or PCIe (PCI express) bus, a Hyper Transport or industry standard architecture (ISA) bus, a small computer system interface (SCSI) bus, a universal serial bus (USB), or a Firewire bus.

In one example, system 700 includes interface 714, which can be coupled to interface 712. In one example, interface 714 represents an interface circuit, which can include standalone components and integrated circuitry. In one example, user interface components or peripheral components, or both, couple to interface 714. Network interface 750 provides system 700 the ability to communicate with remote devices (e.g., servers or other computing devices) over one or more networks. Network interface 750 can include an Ethernet adapter, wireless interconnection components, cellular network interconnection components, USB, or other wired or wireless standards-based or proprietary interfaces. Network interface 750 can transmit data to a device that is in the same data center or rack or a remote device, which can include sending data stored in memory.

Some examples of network interface 750 are part of an infrastructure processing unit (IPU) or data processing unit (DPU), or used by an IPU or DPU. An xPU can refer at least to an IPU, DPU, GPU, GPGPU (general purpose computing on graphics processing units), or other processing units (e.g., accelerator devices). An IPU or DPU can include a network interface with one or more programmable pipelines or fixed function processors to perform offload of operations that could have been performed by a CPU. The IPU or DPU can include one or more memory devices.

In one example, system 700 includes one or more input/output (I/O) interface(s) 760. I/O interface 760 can include one or more interface components through which a user interacts with system 700 (e.g., audio, alphanumeric, tactile/touch, or other interfacing). Peripheral interface 770 can include additional types of hardware interfaces, such as, for example, interfaces to semiconductor fabrication equipment and/or electrostatic charge management devices.

In one example, system 700 includes storage subsystem 780. Storage subsystem 780 includes storage device(s) 784, which can be or include any conventional medium for storing data in a nonvolatile manner, such as one or more magnetic, solid state, and/or optical based disks. Storage 784 can be generically considered to be a "memory," although memory 730 is typically the executing or operating memory to provide instructions to processor 710. Whereas storage 784 is nonvolatile, memory 730 can include volatile memory (e.g., the value or state of the data is indeterminate if power is interrupted to system 700). In one example, storage subsystem 780 includes controller 782 to interface with storage 784. In one example controller 782 is a physical part of interface 712 or processor 710 or can include circuits or logic in both processor 710 and interface 714.

A power source (not depicted) provides power to the components of system 700. More specifically, power source typically interfaces to one or multiple power supplies in system 700 to provide power to the components of system 700.

Exemplary systems may be implemented in various types of computing, smart phones, tablets, personal computers, and networking equipment, such as switches, routers, racks, and blade servers such as those employed in a data center and/or server farm environment.

Besides what is described herein, various modifications can be made to what is disclosed and implementations of the invention without departing from their scope. Therefore, the illustrations and examples herein should be construed in an illustrative, and not a restrictive sense. The scope of the invention should be measured solely by reference to the claims that follow.

The following section of the description relates to further examples. The numbered paragraphs in this section are not claims. The claims are set forth below in the later section headed "claims".
1. A method comprising: creating a first partition of a photolithographic mask design wherein the first partition creates first domains, wherein the first domains have first boundaries, and wherein the photolithographic mask design comprises lithographic features; creating first buffer regions wherein the first buffer regions are regions that second domain boundaries are to avoid; selecting a search distance wherein the search distance is a distance from the first boundaries of the first partition; and using a pathfinding algorithm to find second domains wherein the second domains have second domain boundaries, wherein second domain boundaries are based on the first buffer regions and the search distance, wherein the second domains are different from the first domains.
2. The method of clause 1, wherein at least one of the second domains has greater than ten vertices.
3. The method of clause 1 or clause 2 additionally including adding one or more second buffer regions wherein the one or more second buffer regions are regions that second domain boundaries are to avoid, and using a pathfinding algorithm to find the second domains based also on the one or more second buffer regions.
4. The method of any preceding clause additionally including adding one or more second buffer regions wherein the one or more second buffer regions are regions that second domain boundaries are to absolutely avoid, and using a pathfinding algorithm to find the second domains based also on the one or more second buffer regions.
5. The method of clause 3 or clause 4 wherein the one or more second buffer regions are placed next to one or more features that can grow and cross a domain boundary when independent optimization is performed on the second domains.
6. The method of any preceding clause also including creating manhattanized lithographic features for one or more lithographic features of the photolithographic mask design that are non-manhattan features.
7. The method of any preceding clause wherein the first buffer regions have a size that is specified by a user.
8. The method of any preceding clause wherein the pathfinding algorithm additionally finds second domain boundaries based on a preference to have a second domain boundary pass through one or more lithographic features in a shorter cut-through direction.
9. The method of any preceding clause wherein the pathfinding algorithm additionally finds second domain boundaries based on a preference for the second domain boundaries to not cross a cell boundary.
10. The method of any preceding clause wherein the pathfinding algorithm additionally finds second domain boundaries based on preferred boundary location regions.
11. The method of any preceding clause additionally comprising merging at least one narrow second domain into a neighboring larger second domain wherein a narrow second domain has a first dimension that is less than 50 % of a second orthogonal dimension.
12. At least one machine-readable storage medium comprising non-transitory instructions, that when executed by a processor, cause a device to: create a first partition of a photolithographic mask design wherein the first partition creates first domains, wherein the first domains have first boundaries, and wherein the photolithographic mask design comprises lithographic features; create first buffer regions wherein the first buffer regions are regions that second domain boundaries are to avoid; use a search distance wherein the search distance is a distance from the first boundaries of the first partition; and use a pathfinding algorithm to find second domains wherein the second domains have second domain boundaries, wherein second domain boundaries are based on the first buffer regions and the search distance, wherein the second domains are different from the first domains, and wherein a resulting second domain has greater than ten vertices.
13. The at least one machine-readable storage medium of clause 12, wherein the first buffer regions have a size that is specified by a user.
14. The at least one machine-readable storage medium of clause 12 or clause 13, wherein the first buffer regions have a size that is specified by a user.
15. The at least one machine-readable storage medium of any of clauses 12-14, additionally including add one or more second buffer regions wherein the one or more second buffer regions are regions that the second domain boundaries are to avoid, and use a pathfinding algorithm to find the second domains based also on the one or more second buffer regions.
16. The at least one machine-readable storage medium of clause 15, wherein the one or more second buffer regions are to be placed next to features that can grow and cross a domain boundary when independent optimization is performed on the second domains.
17. The at least one machine-readable storage medium of any of clauses 12-16, also including create manhattanized lithographic features for one or more lithographic features of the photolithographic mask design that are non-manhattan features.
18. The at least one machine-readable storage medium of any of clauses 12-17, wherein the search distance is specified by a user.
19. The at least one machine-readable storage medium of any of clauses 12-18, wherein the pathfinding algorithm additionally finds second domain boundaries based on a preference to have a second domain boundary pass through one or more lithographic features in a shorter cut-through direction.
20. The at least one machine-readable storage medium of any of clause 12-19, wherein the second domains are to be sent to computing resources for independent optimization.

## Claims

1. A method comprising:
creating a first partition of a photolithographic mask design wherein the first partition creates first domains, wherein the first domains have first boundaries, and wherein the photolithographic mask design comprises lithographic features;
creating first buffer regions;
selecting a search distance wherein the search distance is a distance from the first boundaries of the first partition; and
using a pathfinding algorithm to find second domains wherein the second domains have second domain boundaries, wherein second domain boundaries are based on the first buffer regions and the search distance, wherein the first buffer regions are regions that second domain boundaries are to avoid, and wherein the second domains are different from the first domains.

2. The method of claim 1, wherein at least one of the second domains has greater than ten vertices.

3. The method of claim 1 or claim 2 additionally including adding one or more second buffer regions wherein the one or more second buffer regions are regions that second domain boundaries are to avoid, and using the pathfinding algorithm to find the second domains based also on the one or more second buffer regions.

4. The method of any one of claims 1 to 3 additionally including adding one or more second buffer regions wherein the one or more second buffer regions are regions that second domain boundaries are to absolutely avoid, and using a pathfinding algorithm to find the second domains based also on the one or more second buffer regions.

5. The method of claim 3 or claim 4 wherein the one or more second buffer regions are placed next to one or more features that can grow and cross a domain boundary when independent optimization is performed on the second domains.

6. The method of any one of claims 1 to 5 also including creating manhattanized lithographic features for one or more lithographic features of the photolithographic mask design that are non-manhattan features.

7. The method of any one of claims 1 to 6 wherein the first buffer regions have a size that is specified by a user.

8. The method of any one of claims 1 to 7 wherein the pathfinding algorithm additionally finds second domain boundaries based on a preference to have a second domain boundary pass through one or more lithographic features in a shorter cut-through direction.

9. The method of any one of claims 1 to 8 wherein the pathfinding algorithm additionally finds second domain boundaries based on a preference for the second domain boundaries to not cross a cell boundary.

10. The method of any one of claims 1 to 9 wherein the pathfinding algorithm additionally finds second domain boundaries based on preferred boundary location regions.

11. The method of any one of claims 1 to 10, wherein second domains comprise a narrow second domain, wherein a narrow second domain has a first dimension that is less than 50 % of a second orthogonal dimension, and additionally comprising merging the narrow second domain into a neighboring second domain that is not a narrow second domain.

12. The method of any one of claims 1 to 11, wherein the second domains are to be sent to computing resources for independent optimization.

13. A computer program comprising instructions which, when the program is executed by a computer, cause the computer to carry out the method as claimed in any preceding claim.

14. At least one machine-readable storage medium comprising non-transitory instructions that when executed cause a computer to implement a method as claimed in any one of claims 1-12.
